# EUROPÄISCHE PATENTSCHRIFT

(11) **EP 4 261 410 B1**
(45) Veröffentlichungstag und Bekanntmachung des Hinweises auf die Patenterteilung: **18.02.2026**
(21) Anmeldenummer: 23165337.9
(22) Anmeldetag: 30.03.2023
(51) Int. Cl.: F03D 80/80, F03D 80/60, H02G 5/06, H02G 5/10

(54) **WINDKRAFTANLAGE MIT STROMSCHIENENANORDNUNG**
WIND POWER PLANT WITH A BUSBAR ARRANGEMENT
ÉOLIENNE AVEC DISPOSITIF DE BARRE OMNIBUS

(30) Priorität: 12.04.2022 DE 102022203702
(43) Veröffentlichungstag der Anmeldung: 18.10.2023
(73) Patentinhaber: Siemens Aktiengesellschaft, 80333 München (DE)
(72) Erfinder: Roth, Markus, 51371 Leverkusen (DE); Althoff, Sebastian, 40789 Monheim am Rhein (DE); Bertels, Frank, 50765 Köln (DE); Escape, Carlos, 50825 Köln (DE)
(74) Vertreter: Siemens Patent Attorneys

(56) Entgegenhaltungen:
- CN-B- 107 425 491
- US-B2- 10 570 891

## Beschreibung

### Technisches Gebiet

Die Erfindung betrifft eine Windkraftanlage mit einer Stromschienenanordnung.

### Technischer Hintergrund

Windkraftanlagen spielen bei der Erzeugung erneuerbarer Energie eine wichtige Rolle. Üblicherweise umfasst eine Windkraftanlage eine auf einem Turm angeordnete Gondel, die einen mit einem Windrad verbundenen Generator umfasst. Um die von dem Generator erzeugte elektrische Energie in ein Versorgungsnetz einzuspeisen, ist der Generator direkt oder mittelbar mit einem in dem Turm der Windkraftanlage verlegten Leitungsstrang verbunden. Die direkte Verbindung kann bei einer Windkraftanlage mit Getriebe vorgesehen sein, bei einer getriebelosen Windkraftanlage wird hingegen die Anpassung der Ausgangsspannung des Generators auf Netzfrequenz und -phase durch einen Umrichter bewirkt, so dass der Generator mittelbar über den Umrichter mit dem Leitungsstrang verbunden ist.

Die Platzverhältnisse in der Gondel sind naturgemäß beschränkt und Wartungs- und Installationsarbeiten innerhalb der Gondel kompliziert.

Vor diesem Hintergrund macht es sich die Erfindung zur Aufgabe, eine verbesserte Windkraftanlage einzuführen. Aus US 10 570 891 B2 ist eine für den Einsatz in einer Windkraftanlage vorgesehene Stromschienenanordnung mit runden Abstandshaltern bekannt.

### Zusammenfassung der Erfindung

Die Erfindung löst die Aufgabe durch eine Windkraftanlage gemäß Anspruch 1. Vorteilhafte Ausführungsformen der Erfindung bilden die jeweiligen Gegenstände der Unteransprüche.

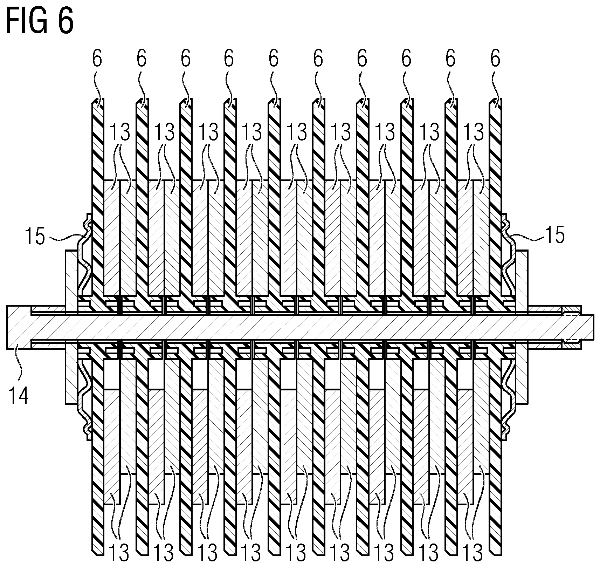

Die erfindungsgemäße Windkraftanlage besitzt einen Turm, eine Gondel und ein Windrad, wobei die Gondel einen mit dem Windrad verbundenen Generator umfasst. Außerdem ist eine Stromschienenanordnung vorgesehen, die einen Ausgang des Generators mit einem in dem Turm angeordneten Leitungsstrang verbindet. Die Stromschienenanordnung besitzt eine Mehrzahl von in jeweilige Stromschienenabschnitte unterteilten Stromschienen. Die Stromschienenabschnitte sind wie in Fig. 6 gezeigt an einem zwei benachbarte Stromschienenabschnitte verbindenden Verbindungspunkt elektrisch und mechanisch verbunden. Dabei sind in jedem der zwei Stromschienenabschnitte zwei benachbarte Stromschienen in einem Stromschienengehäuse zueinander parallel ausgerichtet und voneinander durch eine zwischen den zwei Stromschienen angeordnete Isolatorscheibe elektrisch und räumlich getrennt. Außerdem weist die Stromschienenanordnung eine aktive Kühlung auf, welche ausgebildet ist, Luft entlang einer Hauptströmungsrichtung durch das Stromschienengehäuse zu bewegen. Die Isolatorscheibe weist entlang der Hauptströmungsrichtung einen zwischen einem Anströmpunkt der Isolatorscheibe und einem maximalen Durchmesser der Isolatorscheibe stetig zunehmenden Durchmesser auf. Erfindungsgemäß ist der maximale Durchmesser der Isolatorscheibe dabei größer als ein Durchmesser der Stromschienen.

Stromschienen werden in elektrischen Installationen verwendet, um Elektrizität von einem netzseitigen Anschluss an Verbraucher innerhalb der Installation zu verteilen und den Montageaufwand für eine freie Verkabelung zu vermeiden. Dabei können Stromschienen verschiedener vorkonfektionierter Längen verwendet werden, um die Verteilung an die örtlichen Gegebenheiten der Installation anzupassen. Stromschienenanordnungen zur Verteilung über längere Strecken können in Stromschienenabschnitte unterteilt werden, die jeweils durch einen Satz Stromschienen der für den jeweiligen Stromschienenabschnitt benötigten Länge überbrückt werden. An Verbindungspunkten zwischen den einzelnen Stromschienenabschnitten werden dann die Stromschienen der einzelnen Stromschienenabschnitte übereinandergelegt, so dass die Stromschienen der benachbarten Stromschienenabschnitte miteinander elektrisch in Kontakt kommen. Um unterschiedliche Stromstärken zu verteilen, können zur Erhöhung des Leiterdurchmessers mehrere Stromschienen hintereinander montiert und elektrisch parallelgeschaltet werden. Zwischen den Stromschienen können dabei an den Verbindungspunkten Isolatorscheiben eingesetzt werden, was einerseits der besseren Kühlung aufgrund der Beabstandung der Stromschienen voneinander und andererseits der elektrischen Isolation zwischen auf unterschiedlichen elektrischen Phasen oder Potentialen liegenden Stromschienen dient.

Aufgrund der hohen von den Stromschienen geführten Ströme erhitzen diese sich, was zu einer Wärmeausdehnung der Stromschienen führt, die wiederum mechanischen Stress für die Stromschienenanordnung bedeutet. Um bei gleichbleibenden Leiterdurchmessern und damit gleichbleibendem Materialeinsatz möglichst große Ströme führen zu können und gleichzeitig die Wärmeausdehnung der Stromschienen zu begrenzen, ist bekannt, die Stromschienen aktiv zu kühlen, was beispielsweise durch Gebläse geschehen kann.

Eine Verwendung von Stromschienen für die elektrische Verbindung eines Generators einer Windkraftanlage mit dem Leitungsstrang im Turm ist bislang jedoch nicht bekannt. Für diese Verbindung, die für eine Serie von Windkraftanlagen immer gleich lang und außerdem üblicherweise verwinkelt ist, werden bislang vorkonfektionierte Kabel verwendet. Die erfindungsgemäß stattdessen vorgesehene Stromschienenanordnung ist gegenüber einem Kabel auch unter den beschränkten Platzverhältnissen einer Gondel einfach zu montieren und besitzt darüberhinaus den besonderen Vorteil, dass die Isolatorscheiben, die in regelmäßigen Abständen an den Verbindungspunkten der Stromschienenabschnitte angeordnet sind und dort den Strömungskanal für die kühlende Luft einengen, strömungsoptimiert geformt sind, so dass die notwendigen Isolatorscheiben den Strömungswiderstand durch das Stromschienengehäuse möglichst wenig beeinträchtigen. Im Gegensatz zu den im Stand der Technik verbreiteten quadratischen Isolatorscheiben, die eine Seite der quadratischen Grundform der Strömung zuwenden, werden erfindungsgemäß Formen vorgesehen, die zwischen dem Anströmpunkt der Isolatorscheibe und deren maximalen Durchmesser einen stetig zunehmenden Durchmesser besitzen. Diese Formgebung erlaubt eine weitgehend laminare Umströmung der Isolatorscheibe, was einen höheren Volumenstrom ermöglicht als die an kantigen Formen unweigerlich auftretende Verwirbelung der kühlenden Luft. Durch den reduzierten Strömungswiderstand beziehungsweise den erhöhten Volumenstrom können die Stromschienen effizienter gekühlt werden, so dass ihre Betriebstemperatur bei gleichbleibenden Strömen niedriger ist oder bei gleichbleibender Betriebstemperatur größere Ströme geführt werden können. Dadurch trägt die Stromschiene den verhältnismäßig geringen Generatorspannungen und hohen Generatorströmen Rechnung, die auf der kurzen Strecke zum Umrichter vorliegen. Der Umrichter kann ausgangsseitig einen Transformator besitzen, um den Leistungstransport über die langen Strecken durch Turm und ggf. Windpark bei einer höheren Spannung vorzunehmen.

Besonders bevorzugt verläuft der Durchmesser der Isolatorscheibe entlang der Hauptströmungsrichtung zwischen dem Anströmpunkt und dem maximalen Durchmesser nicht nur stetig, sondern zusätzlich glatt. Dies bedeutet, dass auch die mathematische Ableitung des Verlaufs entlang der Hauptströmungsrichtung stetig ist. Dadurch werden Kanten im Verlauf vermieden, was die laminare Umströmung der Isolatorscheibe weiter verbessert.

Beispielsweise kann die Isolatorscheibe einen kreisförmigen Umfang besitzen. Eine solche Isolatorscheibe kann ohne Beachtung der Hauptströmungsrichtung montiert werden und besitzt aufgrund ihrer rotationssymmetrischen Form dennoch immer die gleichen vorteilhaften Strömungseigenschaften.

Alternativ kann die Isolatorscheibe ein Strömungsprofil mit einer Profildicke und einer Profilsehne aufweisen, ähnlich wie es beispielsweise von Tragflächen bekannt ist. Dabei beträgt die Profildicke zwischen dem 0,3-fachen und dem 0,7-fachen einer Länge der Profilsehne. Das heißt, dass die Isolatorscheibe senkrecht zur Hauptströmungsrichtung eine geringere Ausdehnung besitzt als entlang der Hauptströmungsrichtung. Beispielsweise kann die Isolatorscheibe in seitlicher Ansicht eine Tropfenform besitzen.

Ein Abstand einander gegenüberliegender Wandungen des Stromschienengehäuses quer zu der Hauptströmungsrichtung beträgt vorzugsweise wenigstens das 1,5-fache eines maximalen Durchmessers der Isolatorscheibe. Dadurch bleibt genug Raum zwischen den Wandungen und der jeweils nächstliegenden Kante der Isolatorscheibe, um diese mit ausreichend Luft umströmen zu können. Der Abstand sollte jedoch nicht mehr als das Doppelte des maximalen Durchmessers betragen, da andernfalls das Stromschienengehäuse zu groß wird.

Die Stromschienenanordnung kann mit einer Mehrzahl von Halteelementen ausgestattet sein, welche direkt oder mittelbar zwischen dem Stromschienengehäuse und der Mehrzahl von Stromschienen angeordnet sind. Die Halteelemente sind dazu ausgebildet, das Stromschienengehäuse in definierten Abständen zu den Stromschienen zu halten. Dabei weist jedes Halteelement wenigstens eine in die Hauptströmungsrichtung weisende Durchbrechung auf. Die Durchbrechungen der Halteelemente erlauben es der durch das Stromschienengehäuse strömenden Kühlluft, entlang der Hauptströmungsrichtung durch die Halteelemente hindurchzutreten, so dass die Strömung der Kühlluft nur wenig behindert wird. Vorzugsweise nehmen die Durchbrechungen der Halteelemente wenigstens die Hälfte der von den Halteelementen in Hauptströmungsrichtung umfassten Fläche ein.

Bevorzugt umfasst die aktive Kühlung der Stromschienenanordnung eine Mehrzahl von entlang der Hauptströmungsrichtung verteilt angeordneten Lufteinlässen und/oder Luftauslässen. Hierdurch wird es möglich, erwärmte Luft aus dem Stromschienengehäuse zu entlassen und kühlere Umgebungsluft in das Stromschienengehäuse einzuspeisen. Zudem wird die Distanz, über die die Luft durch das Stromschienengehäuse strömt, verkürzt, was entsprechend den Strömungswiderstand reduziert.

Die aktive Kühlung kann eine Mehrzahl von entlang der Hauptströmungsrichtung verteilt angeordneten Gebläsen umfassen. Dabei kann grundsätzlich ein Gebläse in beliebiger Orientierung angeordnet sein, d.h. Luft in das Stromschienengehäuse einblasen oder aus diesem heraussaugen. Beispielsweise kann ein Gebläse an einem Lufteinlass Luft einblasen und ein weiteres Gebläse an einem Luftauslass Luft ansaugen. Dies gilt auch bei erfindungsgemäßen Ausführungen, bei denen die aktive Kühlung ein in einem Umrichtergehäuse eines Umrichters angeordnetes Gebläse umfasst und das Stromschienengehäuse fluidisch mit dem in dem Umrichtergehäuse angeordneten Gebläse verbunden ist. Die Stromschienenanordnung verbindet hierbei den Generator mittelbar über den Umrichter mit dem Leitungsstrang. Das heißt, dass das Gebläse der aktiven Kühlung nicht unmittelbar an der Stromschienenanordnung vorgesehen sein muss, sondern kann gegebenenfalls auch vorteilhaft mit weiteren Kühlungen anderer Komponenten wie des Umrichters kombiniert werden.

Die Stromschienenanordnung kann in mehrere zueinander gewinkelte Segmente unterteilt sein, wobei jedes Segment wenigstens einen Stromschienenabschnitt umfasst. Dadurch können die Stromschienen in variablen Richtungen geführt werden, was ein Verlegen in beengten und verwinkelten Räumen vereinfacht.

### Kurzbeschreibung der Abbildungen

Die Erfindung wird nachfolgend anhand von Abbildungen von Ausführungsbeispielen näher erläutert. Es zeigen:
Figur 1 eine Ansicht einer für eine erfindungsgemäße Windkraftanlage vorgesehenen Stromschienenanordnung;
Figur 2 eine Draufsicht eines ersten Ausführungsbeispiels einer Isolatorscheibe, wie sie im Rahmen der Erfindung eingesetzt werden kann;
Figur 3 eine Seitenansicht des Ausführungsbeispiels von Figur 2;
Figur 4 eine Draufsicht eines zweiten Ausführungsbeispiels einer Isolatorscheibe, wie sie im Rahmen der Erfindung eingesetzt werden kann;
Figur 5 eine Teilansicht von Stromschienen, wie sie für die Stromschienenanordnung im Rahmen der Erfindung eingesetzt werden können;
Figur 6 einen Querschnitt durch ein Stromschienenpaket, wie es im Rahmen der Erfindung eingesetzt werden kann; und
Figur 7 einen Querschnitt durch ein Ausführungsbeispiel einer Stromschienenanordnung für eine erfindungsgemäße Windkraftanlage.

### Ausführliche Beschreibung der Abbildungen

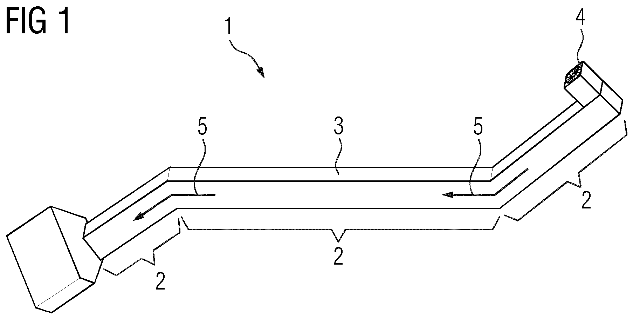

Figur 1 zeigt eine Ansicht einer für eine erfindungsgemäße Windkraftanlage vorgesehenen Stromschienenanordnung 1, die im gezeigten Beispiel drei zueinander gewinkelte Stromschienenabschnitte 2 umfasst. Die eigentlichen Stromschienen sind in der Darstellung nicht zu sehen, da sie im Inneren eines Stromschienengehäuses 3 angeordnet sind, welches zur Isolierung der Stromschienen gegen die Umgebung dient. Eine aktive Kühlung, vorliegend als Gebläse 4 ausgebildet, das Umgebungsluft in das Stromschienengehäuse 3 einbläst und entlang einer Hauptströmungsrichtung 5 durch das Stromschienengehäuse 3 leitet, dient zur Kühlung der Stromschienen, so dass diese bei gleicher Temperatur und Ausdehnung einen größeren elektrischen Strom führen können (siehe die diesbezüglichen Ausführungen oben). Abhängig vom Kühlbedarf und der Länge der Stromschienenanordnung 1 können Gebläse 4 an beiden Enden des Stromschienengehäuses und/oder entlang der Stromschienenanordnung 1 vorgesehen sein. Ebenso können mehrere Ein- und Auslässe für Kühlluft vorgesehen sein. Auch ist es möglich, das Stromschienengehäuse 3 fluidisch mit einem in einem Umrichter der Windkraftanlage angeordneten Gebläse zu verbinden, so dass das Gebläse nicht an der Stromschienenanordnung selbst vorgesehen sein muss, obgleich ein derart angeordnetes Gebläse vorliegend der Stromschienenanordnung zugerechnet wird.

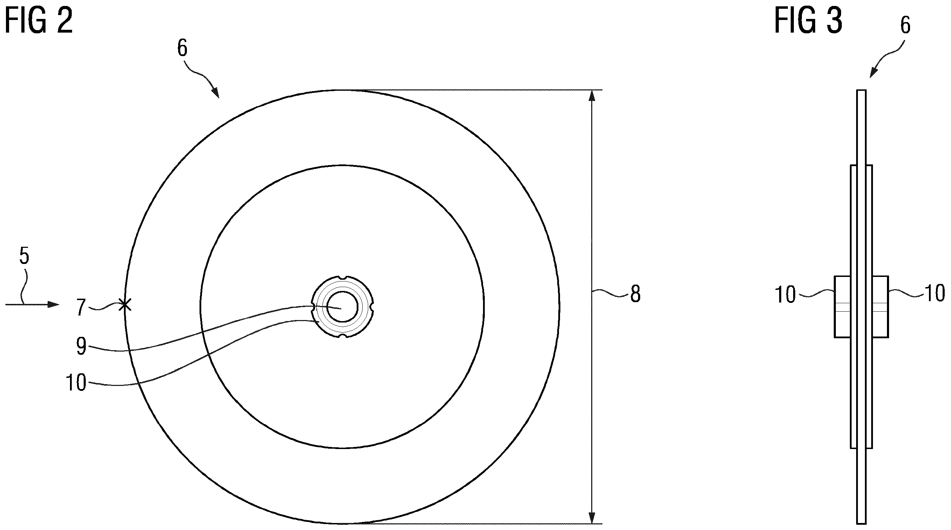

Figur 2 zeigt eine Draufsicht eines ersten Ausführungsbeispiels einer Isolatorscheibe 6, wie sie im Rahmen der Erfindung eingesetzt werden kann. Die Isolatorscheibe 6 von Figur 2 besitzt einen kreisförmigen Umfang. Die Isolatorscheibe 6 ist somit rotationssymmetrisch um ein in ihrer Mitte befindliches Loch 9 ausgestaltet, so dass ein Durchmesser der Isolatorscheibe 6 zwischen einem Anströmpunkt 7 und einem maximalen Durchmesser 8 entlang der Hauptströmungsrichtung 5 stetig zunimmt.

Um das Loch 9 herum sind auf beiden Seiten der Isolatorscheibe 6 jeweilige Kragen 10 vorgesehen, die sich über jeweilige Haupterstreckungsebenen der jeweiligen Seite der Isolatorscheibe 6 hinaus erheben. Die Kragen 10 verlängern ein zylindrisches Volumen des Loches 9 und ermöglichen es, ein durch das Loch 9 geführtes Befestigungselement wie beispielsweise einen Klemmbolzen elektrisch von auf den Seiten der Isolatorscheibe 6 angeordneten Stromschienen zu isolieren, wodurch das Befestigungselement durch eine oder mehrere Stromschienen hindurchgeführt werden kann, ohne diese miteinander kurzzuschließen.

Figur 3 zeigt eine Seitenansicht des Ausführungsbeispiels der Isolatorscheibe 6 von Figur 2. Das gezeigte Ausführungsbeispiel weist eine in der Seitenansicht gestufte Formgebung auf, bei der ein zentraler Bereich um die Kragen 10 herum als Auflagefläche für die Stromschienen und ein dünnerer peripherer ringscheibenförmiger Bereich zur Verlängerung der Kriechstrecke zwischen gegenüberliegend auf der Isolatorscheibe 6 aufliegenden Stromschienen dienen.

Der dünner ausgeführte periphere Bereich der Isolatorscheibe 6 bietet außerdem einen geringeren Strömungswiderstand gegenüber einer Ausführung, in der der periphere Bereich dieselbe Dicke besitzt wie der zentrale Bereich der Isolatorscheibe 6, der als Auflagefläche für die Stromschienen dient. Eine kreisförmige Ausführung der Isolatorscheibe 6 wie in den Figuren 2 und 3 gezeigt, vereinfacht die Montage der Isolatorscheibe 6, da hierbei nicht auf die Ausrichtung der Isolatorscheibe 6 relativ zu der Hauptströmungsrichtung 5 geachtet werden muss. Allerdings stellt die kreisförmige Isolatorscheibe 6 einen höheren Strömungswiderstand für durch das Stromschienengehäuse 3 geführte Kühlluft dar als das nachfolgend gezeigte Ausführungsbeispiel einer Isolatorscheibe 6, wie sie in der erfindungsgemäßen Stromschienenanordnung verwendet werden kann.

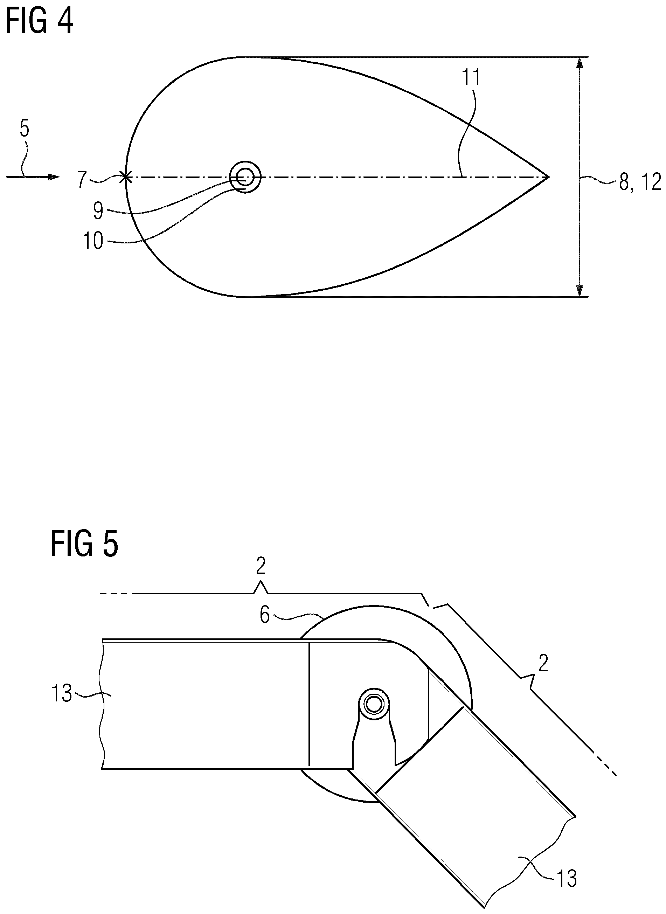

Figur 4 zeigt eine Draufsicht eines zweiten Ausführungsbeispiels einer Isolatorscheibe 6, die in der Draufsicht gemäß einem Strömungsprofil geformt ist, ähnlich jenen, wie sie von Tragflächen bekannt sind. Allerdings ist es erfindungsgemäß vorteilhaft, die Isolatorscheibe 6 zu einer Profilsehne 11 symmetrisch auszuführen, da das Strömungsprofil selbstredend keinen Auftrieb erzeugen soll. Bevorzugt ist dabei eine Profildicke 12, die beim gezeigten Beispiel mit dem maximalen Durchmesser 8 der Isolatorscheibe 6 zusammenfällt, dabei geringer als die Profilsehne 11. Beispielsweise kann die Profildicke zwischen dem 0,3-fachen und dem 0,7-fachen einer Länge der Profilsehne messen. Bei dem gezeigten Beispiel verläuft die Profildicke 8 durch das Loch 9 der Isolatorscheibe 6, die ist jedoch nicht erforderlich.

Figur 5 zeigt eine Teilansicht von Stromschienen 13, wie sie im Rahmen der Erfindung für die Stromschienenanordnung 1 eingesetzt werden können. Zwei nur ausschnittsweise dargestellte Stromschienen 13 sind miteinander flächig aufeinanderliegend elektrisch kontaktiert, so dass Strom durch die Stromschienen 13 fließen kann. Zwischen den Stromschienen 13 und in der Ansicht hinter den dargestellten Stromschienen 13 liegenden weiteren Stromschienen (benachbarte Stromschienen) ist eine Isolatorscheibe 6 angeordnet, welche im gezeigten Beispiel gemäß dem Ausführungsbeispiel der Figuren 2 und 3 ausgestaltet ist. Die Stromschienenabschnitte 2 der Stromschienenanordnung 1 gliedern sich gemäß den einzelnen Stromschienen 13, welche vorliegend gewinkelt zueinander ausgerichtet sind.

Figur 6 zeigt einen Querschnitt durch ein Stromschienenpaket, wie es im Rahmen der Erfindung eingesetzt werden kann. Der Querschnitt ist in Figur 6 in einem Verbindungspunkt zweier Stromschienenabschnitte 2 gesetzt. Das gezeigte Beispiel zeigt insgesamt neun Paare von paarweise aufeinandergelegten Stromschienen 13, wodurch jeweils die beiden Stromschienen 13 eines Paares flächig miteinander in elektrischem Kontakt stehen. In jedem Paar von Stromschienen 13 weisen die Stromschienen 13 in wenigstens näherungsweise entgegengesetzte Richtungen, also eine Stromschiene 13 in die Tiefe der Darstellung und eine aus der Darstellung heraus.

Im gezeigten Beispiel sind jeweils drei Paare von Stromschienen 13 für eine von drei elektrischen Phasen vorgesehen. Es sind selbstverständlich andere Anzahlen möglich, je nachdem, wie viel elektrischer Strom geführt werden soll, was für Querschnitte die Stromschienen 13 aufweisen, aus welchen Materialien die Stromschienen 13 bestehen und wie lang die Stromschienenanordnung beziehungsweise wie hoch der maximal zulässige Widerstand der Stromschienenanordnung für eine gegebene Anwendung ist.

Die Stromschienen 13 jedes Paars sind durch Isolatorscheiben 6 von den benachbarten Stromschienen 13 elektrisch und räumlich getrennt. Auch die auf beiden Seiten des Stromschienenpakets zu äußerst liegenden Stromschienen sind zu den Seiten hin durch Isolatorscheiben 6 isoliert. Die Isolatorscheiben 6 weisen dabei einen größeren Durchmesser auf als die Stromschienen 13, um so vergrößerte Kriechstrecken zwischen benachbarten Stromschienenpaaren zu erzeugen.

Das Stromschienenpaket wird durch einen Klemmbolzen 14 zusammengehalten, wobei Federelemente 15 zu beiden Seitenvorgesehen sind, um eine definierte Federkraft auf die aufeinanderliegenden Stromschienen 13 und die Isolatorscheiben 6 auszuüben.

Der Klemmbolzen 14 kann auch zusätzlich dazu dienen, ein Stromschienengehäuse (nicht dargestellt) an dem Stromschienenpaket zu befestigen, das die Stromschienen 13 von der Umgebung abschirmt. Alternativ ist es aber auch möglich, das Stromschienengehäuse selbsttragend auszuführen, wobei es nur an den entgegengesetzten Enden der Stromschienenanordnung und/oder an entlang der Stromschienenanordnung verteilten Stützpunkten gestützt oder gehalten wird.

Durch das Stromschienengehäuse kann Kühlluft geleitet werden, wobei die Kühlluft in der Querschnittszeichnung der Figur 6 wenigstens näherungsweise in oder entgegen einer Tiefenrichtung der Darstellung strömt (Hauptströmungsrichtung). Während der Querschnitt im Beispiel der Figur 6 durch die maximalen Durchmesser der Isolatorscheiben 6 erfolgt, liegen die Anströmpunkte der Isolatorscheiben 6 somit in einer Ebene vor oder hinter dem Klemmbolzen 14, abhängig davon, ob die Hauptströmungsrichtung in die oder entgegen der Tiefenrichtung der Darstellung weist. Die Isolatorscheiben 6 weisen entlang der Hauptströmungsrichtung einen zwischen den Anströmpunkten der Isolatorscheiben 6 und den maximalen Durchmessern der Isolatorscheiben 6 stetig zunehmende Durchmesser auf.

Das Stromschienengehäuse kann einander gegenüberliegende Wandungen besitzen, die vorzugsweise von den Isolatorscheiben 6 beabstandet sind. Je größer der Abstand, desto größer ist das Volumen an Kühlluft, das durch das Stromschienengehäuse geleitet werden kann. Mit dem Volumen an Kühlluft steigt die Kühlleistung der aktiven Kühlung. Allerdings sind der Größe der Stromschienenanordnung anwendungsbedingt Grenzen gesetzt. Daher beträgt der Abstand der einander gegenüberliegenden Wandungen des Stromschienengehäuses vorzugsweise wenigstens das Anderthalbfache des maximalen Durchmessers der Isolatorscheiben 6 in einer Abstandsrichtung und quer zu der Hauptströmungsrichtung. Dadurch verbleibt an dem Verbindungspunkt zweier Stromschienenabschnitte auf jeder Seite des Stromschienenpakets wenigstens ein Viertel des maximalen Durchmessers der Isolatorscheiben als freier Raum. Der Abstand der gegenüberliegenden Wandungen des Stromschienengehäuses sollte jedoch vorzugsweise nicht mehr als das Doppelte des maximalen Durchmessers der Isolatorscheiben in der Abstandsrichtung betragen, da andernfalls das Stromschienengehäuse und das Volumen der Gesamtanordnung zu groß würde.

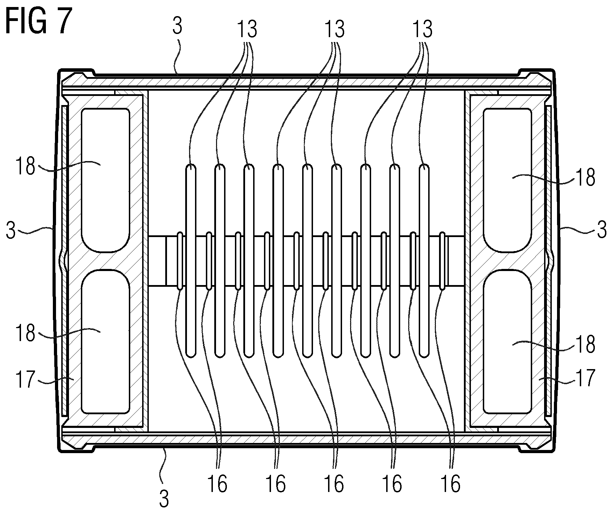

Figur 7 zeigt einen Querschnitt durch ein Ausführungsbeispiel einer Stromschienenanordnung für eine erfindungsgemäße Windkraftanlage. Der Querschnitt der Figur 7 ist im Mittelbereich einer Stromschienenabschnitts, abseits einer Verbindung zu einem benachbarten Stromschienenabschnitt, gesetzt, weshalb auch die Stromschienen 13 nicht paarweise wie in Figur 6 sondern einzeln voneinander beabstandet zu sehen sind. Zwischen den Stromschienen 13 sind Isolatoren 16 angeordnet, die dementsprechend wenigstens näherungsweise die doppelte Dicke der Isolatorscheiben 6 von Figur 6 besitzen. Wegen der durch die größere Dicke verlängerte Kriechstrecken zwischen benachbarten Stromschienen 13 kann der maximale Umfang der Isolatoren 16 deutlich kleiner gewählt werden als der der Isolatorscheiben 6 an den Verbindungen zwischen benachbarten Stromschienenabschnitten. Im gezeigten Beispiel weisen die Isolatoren 16 ringförmige Wulste auf, um die Kriechstrecken zu verlängern. Je nach Anwendung können die Wulste vergrößert werden, mehrere Wulste nebeneinander angeordnet oder aber auch entfallen.

Stromschienen 13 und Isolatoren 6 sind durch einen durch eine axiale Durchführung der Isolatoren 6 geführten Bolzen (nicht dargestellt) gehalten, wobei die Isolatoren 6 den Bolzen elektrisch von den Stromschienen 13 isolieren. Der Bolzen kann bei Transport und Installation der Stromschienenanordnung als Aufhängepunkt für Tragewerkzeuge, Kräne, Aufhängungen und dergleichen verwendet werden, so dass das Stromschienengehäuse 3 mechanisch nicht durch das Gewicht der in seinem Inneren befindlichen Stromschienen 13 belastet wird.

Das Stromschienengehäuse 3 kann dabei von ebenfalls an dem Bolzen angesetzten Halteelementen 17 in definierten Abständen zu den Seiten und Kanten der Stromschienen 13 gehalten werden. Die Halteelemente 17 des Ausführungsbeispiels von Figur 7 halten die (in der Figur links und rechts gezeigten) Seitenwände des Stromschienengehäuses in einem seitlichen Abstand zu den jeweiligen äußersten Stromschienen 13 des Stromschienenpakets. Außerdem stützen sie die in der Figur oben und unten gezeigten Wandungen, so dass diese - wie oben beschrieben - in einem vorteilhaften Abstand zu den Kanten der Stromschienen 13 gehalten werden. Die beispielhaft gezeigten Halteelemente 17 besitzen dabei Durchbrechungen oder Aussparungen 18, durch die in oder entgegen der Tiefenrichtung der Darstellung, also in der Hauptströmungsrichtung, Kühlluft durchtreten kann. Dadurch behindern die Halteelemente 17 die Kühlluft beim Durchströmen der Stromschienenanordnung möglichst wenig. Um die Behinderung der Strömung der Kühlluft möglichst stark zu reduzieren, nehmen die Durchbrechungen 18 vorzugsweise wenigstens die Hälfte der von den Halteelementen 17 in der Hauptströmungsrichtung umfassten Fläche ein.

Die Abstände zwischen Halteelementen 17 entlang der Hauptströmungsrichtung der Kühlluft können einen halben Meter und mehr betragen, so dass zwischen den (in der Figur 7 in Tiefenrichtung gestaffelten) Halteelementen 17 die Kühlluft frei entlang der Seitenflächen der Stromschienen 13 strömen kann.

Die Erfindung wurde anhand von Ausführungsbeispielen näher erläutert. Die Beispiele dienen dabei dem besseren Verständnis und sollen die Erfindung, die ausschließlich durch die nachfolgenden Patentansprüche definiert wird, nicht beschränken.

### Bezugszeichenliste

- 1: Stromschienenanordnung
- 2: Stromschienenabschnitt
- 3: Stromschienengehäuse
- 4: aktive Kühlung
- 5: Hauptströmungsrichtung
- 6: Isolatorscheibe
- 7: Anströmpunkt
- 8: maximaler Durchmesser
- 9: Loch
- 10: Kragen
- 11: Profilsehne
- 12: Profildicke
- 13: Stromschiene
- 14: Klemmbolzen
- 15: Federelement
- 16: Isolator
- 17: Halteelement
- 18: Durchbrechung

## Patentansprüche

1. Eine Windkraftanlage mit einem Turm, einer Gondel und einem Windrad, wobei die Gondel einen mit dem Windrad verbundenen Generator umfasst, wobei außerdem eine Stromschienenanordnung (1) vorgesehen ist, die einen Ausgang des Generators mit einem in dem Turm angeordneten Leitungsstrang verbindet, wobei die Stromschienenanordnung (1) eine Mehrzahl von in jeweilige Stromschienenabschnitte (2) unterteilten Stromschienen (13) umfasst, wobei zwei benachbarte Stromschienenabschnitte (2) in einem Verbindungspunkt verbunden sind, indem jeweils eine Stromschiene (13) jedes der zwei Stromschienenabschnitte (2) an dem Verbindungspunkt flächig aufeinandergelegt in elektrischem Kontakt stehen, wobei die jeweiligen Stromschienen (13) der zwei Stromschienenabschnitte (2) wenigstens näherungsweise in entgegengesetzte Richtungen weisen, wobei zwei benachbarte Stromschienen (13) desselben Stromschienenabschnitts (2) in einem Stromschienengehäuse (3) zueinander parallel ausgerichtet und voneinander durch eine zwischen den zwei Stromschienen (13) angeordnete Isolatorscheibe (6) elektrisch und räumlich getrennt sind, einem Klemmbolzen (14), der dazu ausgebildet ist, die Stromschienen (13) an dem Verbindungspunkt zusammenzuhalten, wobei Federelemente (15) zu beiden Seiten des Klemmbolzens (14) vorgesehen und dazu ausgebildet sind, eine definierte Federkraft auf die aufeinanderliegenden Stromschienen (13) und die Isolatorscheibe (6) auszuüben, und einer aktiven Kühlung (4), welche ausgebildet ist, Luft entlang einer Hauptströmungsrichtung (5) durch das Stromschienengehäuse (3) zu bewegen, wobei die Isolatorscheibe (6) entlang der Hauptströmungsrichtung (5) einen zwischen einem Anströmpunkt (7) der Isolatorscheibe (6) und einem maximalen Durchmesser (8) der Isolatorscheibe (6) stetig zunehmenden Durchmesser aufweist, wobei der maximale Durchmesser (8) der Isolatorscheibe (6) größer ist als ein Durchmesser der Stromschienen (13).

2. Die Windkraftanlage des vorhergehenden Anspruchs, bei der der Durchmesser der Isolatorscheibe (6) entlang der Hauptströmungsrichtung (5) zwischen dem Anströmpunkt (7) und dem maximalen Durchmesser (8) glatt verläuft.

3. Die Windkraftanlage eines der vorhergehenden Ansprüche, bei der die Isolatorscheibe (6) einen kreisförmigen Umfang besitzt.

4. Die Windkraftanlage eines der Ansprüche 1 oder 2, bei der die Isolatorscheibe (6) ein Strömungsprofil mit einer Profildicke (12) und einer Profilsehne (11) aufweist, wobei die Profildicke (12) zwischen dem 0,3-fachen und dem 0,7-fachen einer Länge der Profilsehne (11) beträgt.

5. Die Windkraftanlage eines der vorhergehenden Ansprüche, bei der ein Abstand einander gegenüberliegender Wandungen des Stromschienengehäuses (3) quer zu der Hauptströmungsrichtung (5) wenigstens das 1,5-fache des maximalen Durchmessers (8) der Isolatorscheibe (6) beträgt.

6. Die Windkraftanlage eines der vorhergehenden Ansprüche, bei der die Stromschienenanordnung (1) mit einer Mehrzahl von Halteelementen (17) ausgestattet ist, welche direkt oder mittelbar zwischen dem Stromschienengehäuse (3) und der Mehrzahl von Stromschienen (13) angeordnet und dazu ausgebildet sind, das Stromschienengehäuse (3) in definierten Abständen zu den Stromschienen (13) zu halten, wobei jedes Halteelement (17) wenigstens eine in die Hauptströmungsrichtung weisende Durchbrechung (18) aufweist.

7. Die Windkraftanlage eines der vorhergehenden Ansprüche, bei der die aktive Kühlung (4) eine Mehrzahl von entlang der Hauptströmungsrichtung (5) verteilt angeordneten Lufteinlässen und/oder Luftauslässen umfasst.

8. Die Windkraftanlage des vorhergehenden Anspruchs, bei der die aktive Kühlung (4) eine Mehrzahl von entlang der Hauptströmungsrichtung (5) verteilt angeordneten Gebläsen (4) umfasst.

9. Die Windkraftanlage eines der Ansprüche 1 bis 7, bei der die aktive Kühlung (4) ein in einem Umrichtergehäuse eines Umrichters angeordnetes Gebläse (4) umfasst, wobei die Stromschienenanordnung (1) den Generator mittelbar über den Umrichter mit dem Leitungsstrang verbindet und wobei das Stromschienengehäuse (3) fluidisch mit dem in dem Umrichtergehäuse angeordneten Gebläse (4) verbunden ist.

10. Die Windkraftanlage eines der vorhergehenden Ansprüche, bei der die Stromschienenanordnung (1) in mehrere zueinander gewinkelte Segmente unterteilt ist, wobei jedes Segment wenigstens einen Stromschienenabschnitt (2) umfasst.

## Claims

1. Wind power installation having a tower, a nacelle and a wind turbine, wherein the nacelle comprises a generator connected to the wind turbine, wherein a busbar arrangement (1) which connects an output of the generator to a line section arranged in the tower is also provided, wherein the busbar arrangement (1) comprises a plurality of busbars (13) divided into respective busbar portions (2), wherein two adjacent busbar portions (2) are connected at a connection point, whereby a respective busbar (13) of each of the two busbar portions (2) are in electrical contact, laid flat one on top of the other, at the connection point, wherein the respective busbars (13) of the two busbar portions (2) point at least approximately in opposite directions, wherein two adjacent busbars (13) of the same busbar portion (2) are aligned parallel to one another in a busbar housing (3) and are electrically and physically separated from one another by an insulator disc (6) arranged between the two busbars (13), a clamping bolt (14) which is designed to hold the busbars (13) together at the connection point, wherein spring elements (15) are provided on both sides of the clamping bolt (14) and are designed to exert a defined spring force on the busbars (13) lying one on top of the other and the insulator disc (6), and an active cooling system (4) which is designed to move air through the busbar housing (3) along a main flow direction (5), wherein the insulator disc (6) has a continuously increasing diameter along the main flow direction (5) between an inflow point (7) of the insulator disc (6) and a maximum diameter (8) of the insulator disc (6), wherein the maximum diameter (8) of the insulator disc (6) is greater than a diameter of the busbars (13).

2. Wind power installation of the preceding claim, in which the diameter of the insulator disc (6) runs evenly along the main flow direction (5) between the inflow point (7) and the maximum diameter (8).

3. Wind power installation of either of the preceding claims, in which the insulator disc (6) has a circular perimeter.

4. Wind power installation of either of Claims 1 and 2, in which the insulator disc (6) has a flow profile having a profile thickness (12) and a profile chord (11), wherein the profile thickness (12) is between 0.3 times and 0.7 times the length of the profile chord (11).

5. Wind power installation of one of the preceding claims, in which a distance between mutually opposite walls of the busbar housing (3), transversely with respect to the main flow direction (5), is at least 1.5 times the maximum diameter (8) of the insulator disc (6).

6. Wind power installation of one of the preceding claims, in which the busbar arrangement (1) is equipped with a plurality of holding elements (17) which are arranged directly or indirectly between the busbar housing (3) and the plurality of busbars (13) and are designed to hold the busbar housing (3) at defined distances from the busbars (13), wherein each holding element (17) has at least one through-hole (18) pointing in the main flow direction.

7. Wind power installation of one of the preceding claims, in which the active cooling system (4) comprises a plurality of air inlets and/or air outlets arranged distributed along the main flow direction (5).

8. Wind power installation of the preceding claim, in which the active cooling system (4) comprises a plurality of fans (4) arranged distributed along the main flow direction (5).

9. Wind power installation of one of Claims 1 to 7, in which the active cooling system (4) comprises a fan (4) arranged in a converter housing of a converter, wherein the busbar arrangement (1) connects the generator to the line section indirectly via the converter and wherein the busbar housing (3) is fluidically connected to the fan (4) arranged in the converter housing.

10. Wind power installation of one of the preceding claims, in which the busbar arrangement (1) is divided into a plurality of segments which are angled with respect to one another, wherein each segment comprises at least one busbar portion (2).

## Revendications

1. Une éolienne comprenant une tour, une nacelle et une roue éolienne, dans laquelle la nacelle comprend un générateur relié à la roue éolienne, dans laquelle il est prévu en outre un agencement (1) de rails de courant, qui connecte une sortie du générateur à une ligne de conduction disposée dans la tour, dans laquelle l'agencement (1) de rails de courant comprend une pluralité de rails (13) de courant subdivisés en des tronçons (2) respectifs de rail de courant, dans laquelle deux tronçons (2) voisins de rail de courant sont connectés en un point de connexion, par le fait que, respectivement, un rail (13) de courant de chacun des deux tronçons (2) de rail de courant sont mis l'un sur l'autre par surface en étant en contact électrique au point de connexion, dans laquelle les rails (13) de courant respectifs des deux tronçons (2) de rail respectifs sont tournés au moins à peu près dans des sens contraires, dans laquelle deux rails (13) voisins de courant du même tronçon (2) de rail de courant sont disposés en étant parallèles entre eux dans un boîtier (3) de rails de courant et sont séparés électriquement et dans l'espace l'un de l'autre par un disque (6) isolant disposé entre les deux rails (13) de courant, un boulon (14) de serrage, qui est constitué pour maintenir ensemble les rails (13) de courant au point de connexion, dans laquelle des éléments (15) de ressort sont prévus aux deux côtés du boulon (14) de serrage et constitués pour appliquer une force de ressort définie aux rails (13) de courant superposés et au disque (6) isolant et un refroidissement (4) actif, qui est constitué pour déplacer de l'air suivant une direction (5) d'écoulement principale dans le boîtier (3) de rails de courant, dans laquelle le disque (6) isolant a, suivant la direction (5) d'écoulement principale, un diamètre constamment croissant entre un point (7) d'incidence sur le disque (6) isolant et un diamètre (8) maximum du disque (6) isolant, le diamètre (8) maximum du disque (6) isolant étant plus grand qu'un diamètre des rails (13) de courant.

2. L'éolienne de la revendication précédente, dans laquelle le diamètre du disque (6) isolant s'étend de manière égale le long de la direction (5) d'écoulement principale entre le point (7) d'incidence et le diamètre (8) maximum.

3. L'éolienne de l'une des revendications précédentes, dans laquelle le disque (6) isolant possède un pourtour circulaire.

4. L'éolienne de l'une des revendications 1 ou 2, dans laquelle le disque (6) isolant a un profil d'écoulement ayant une épaisseur (12) de profil et une corde (11) de profil, dans laquelle l'épaisseur (12) de profil représente entre 0,3 fois et 0,7 fois une longueur de la corde (11) de profil.

5. L'éolienne de l'une des revendications précédentes, dans laquelle une distance entre des parois opposées du boîtier (3) de rails de courant, transversalement à la direction (5) d'écoulement principale, représente 1,5 fois le diamètre (8) maximum du disque (6) isolant.

6. L'éolienne de l'une des revendications précédentes, dans laquelle l'agencement (1) de rails de courant est équipé d'une pluralité d'éléments (17) de maintien, qui sont disposés directement ou indirectement entre le boîtier (3) de rails de courant et la pluralité de rails (13) de courant et qui sont constitués pour maintenir le boîtier (3) de rails de courant à des distances définies des rails (13) de courant, dans laquelle chaque élément (17) de maintien a au moins une découpure (18) tournée dans la direction d'écoulement principale.

7. L'éolienne de l'une des revendications précédentes, dans laquelle le refroidissement (4) actif comprend une pluralité d'entrées d'air et/ou de sorties d'air disposées de manière répartie suivant la direction (5) d'écoulement principale.

8. L'éolienne de l'une des revendications précédentes, dans laquelle le refroidissement (4) actif comprend une pluralité de soufflantes (4) disposées de manière répartie suivant la direction (5) d'écoulement principale.

9. L'éolienne de l'une des revendications 1 à 7, dans laquelle le refroidissement (4) actif comprend une soufflante (4) disposée dans un boîtier de convertisseur, dans laquelle l'agencement (1) de rails de courant connecte le générateur à la ligne de conduction indirectement par le convertisseur et dans laquelle le boîtier (3) de rails de courant communique fluidiquement avec la soufflante (4) disposée dans le boîtier du convertisseur.

10. L'éolienne de l'une des revendications précédentes, dans laquelle l'agencement (1) de rails de courant est subdivisé en plusieurs segments faisant un angle entre eux, dans laquelle chaque segment comprend au moins un tronçon (2) de rail de courant.
